## Europäisches Patentamt

## European Patent Office

## Office européen des brevets

(11) Veröffentlichungsnummer : **0 408 545 B1**

(12) **EUROPÄISCHE PATENTSCHRIFT**

(45) Veröffentlichungstag der Patentschrift :
**07.10.92 Patentblatt 92/41**

(21) Anmeldenummer : **90890211.7**

(22) Anmeldetag : **16.07.90**

(51) Int. Cl.$^5$ : **C02F 11/14**

(54) **Verfahren zur Inertisierung und/oder Immobilisierung von Schadstoffen.**

(30) Priorität : **14.07.89 AT 1715/89**
**17.08.89 AT 1956/89**
**14.07.89 AT 1714/89**

(43) Veröffentlichungstag der Anmeldung :
**16.01.91 Patentblatt 91/03**

(45) Bekanntmachung des Hinweises auf die
Patenterteilung :
**07.10.92 Patentblatt 92/41**

(84) Benannte Vertragsstaaten :
**BE CH DE DK ES FR GB GR IT LI LU NL SE**

(56) Entgegenhaltungen :
**EP-A- 0 017 741**
**EP-A- 0 050 371**
**LU-A- 42 343**

(73) Patentinhaber : **TECHFORM ENGINEERING AG**
**Gheidstrasse 151**
**CH-8105 Watt (CH)**

(72) Erfinder : **Jung, Fritz, Dipl.-Ing. Dr.**
**Innstrasse 15**
**A-1200 Wien (AT)**

(74) Vertreter : **Brauneiss, Leo et al**
**Patentanwälte Dipl.-Ing. Leo Brauneiss,**
**Dipl.-Ing. Dr. Helmut Wildhack Landstrasser**
**Hauptstrasse 50 Postfach 281**
**A-1031 Wien (AT)**

EP 0 408 545 B1

## Beschreibung

Ziel des Verfahrens ist es, in wässerigen Abfallstoff-Dispersionen, -Suspensionen, -Emulsionen und/oder -Lösungen enthaltene umweltrelevante anorganische und/oder organische Schadstoffe durch eine Behandlung mit Bindemitteln dauerhaft und sicher einzubinden, zu inertisieren bzw. zu immobilisieren.

Bei den aus den Waschwässern von Rauchgasreinigungsanlagen bzw. aus Schlämmen und ähnlichen wässerigen Dispersionen, Suspensionen, Emulsionen oder Lösungen in Filterpressen oder ähnlichen Entwässerungsvorrichtungen anfallenden Filterkuchen handelt es sich naturgemäß um außerordentlich feinkörnige Materialgemische, was sich für die Einbindung von Schadstoffen in den Filterkuchen als günstig erweist und diese verbessert. Diese Filterkuchen besitzen nach der Filterpresse häufig noch einen Wassergehalt von 50 bis 70% oder noch höher. Trotzdem hat es sich als außerordentlich schwierig erwiesen, diese feinteiligen, oft plastischen Filterkuchen mit Zement oder anderen Bindemitteln so zu mischen, daß eine homogene Verteilung des Bindemittels im den Filterkuchen bildenden Material vorliegt. Die nicht aufgeschlossenen Abfallstoffteilchen stellen aber Schwachstellen dar, da sie die Einbindung der Schadstoffe verschlechtern, sowie in der Regel die Erhärtung beeinträchtigen und die Beständigkeit der aus dem bindemittelverfestigten Material gebildeten Formkörper oder Kompaktkörper verschlechtern. Die Mischbarkeit mit den Bindemitteln wird weiters durch während des Preßvorganges entstehende Texturen erschwert, die jenen ähnlich sind, die sich bei der Verformung von plastischen Ionen in der Keramikindustrie bilden. Diese Texturen erhöhen den Wasserbedarf und beeinträchtigen die Mischbarkeit mit dem Bindemittel. Eine auch nur halbwegs ausreichende Verteilung des Bindemittels in dem den Filterkuchen bildenden Material ist nur dadurch zu erreichen, daß die Mischung des Bindemittel/Filterkuchen- -Gemisches unter Hinzufügung von erheblichen, zusätzlichen Wassermengen durchgeführt wird, was die Festigkeit und Frostbeständigkeit des entstehenden Formkörpers vermindert und seine Durchlässigkeit und die Einbindung der Schadstoffe verschlechtert.

Ein Einsatz von anorganischen Bindemitteln zur Behandlung von Abwässern ist beispielsweise aus folgenden Druckschriften bekanntgeworden:

So beschreibt die - an sich ein ganz enges Gebiet betreffende -EP-A1 17741 eine Methode, saure Phosphorsäure-Extraktionsrückstände durch gewöhnliches Kalkhydrat oder gewöhnlichen gebrannten Kalk in deponiefähigen Zustand überzuführen. Dort findet im sich bildenden Filterkuchen eine Neutralisationsreaktion statt. Das eingesetzte Ca-oxid bzw. -hydroxid stellt kein hydraulisches Bindemittel dar.

Ähnlich liegt das wesentliche Problem, dessen Lösung die EP-A1 50370 anstrebt, gemäß welcher Dünnsäuren mit Braunkohlenaschen, die alkalisch reagieren und nur teilweise und dann auch nur in Gegenwart von Anregern latentes hydraulisches Bindevermögen aufweisen, behandelt und praktisch ebenfalls neutralisiert werden.

Die der LU-A 42343 entnehmbare Verfestigung von "dünnen" flüssigen Abfallmassen sieht die Zugabe von ganz speziellen natürlichen oder synthetischen, organischen Agglomerierungsmitteln vor. Um deren Wirkung zu ergänzen, werden dem sich bildenden Schlamm "Beschwerungsmittel" zugesetzt, wobei aber nicht ein Einbinden durch Abbinden, sondern die Adhäsion der Schadstoffe an oberflächenreichen Teilchen mit höherer Dichte im Vordergrund steht, was die dort vorgesehene Verwendung von Inertsubstanzen, wie Kalksteinmehl und "Berge" deutlich zeigt. Als diesen gleichwertige Beschwerungsmittel werden Zement und Gips vorgeschlagen, wobei auf deren bindevermögen nicht näher eingegangen ist. Das Verfahren gemäß dieser LU-A hängt von teuren organischen Agglomerierungsmitteln ab, deren an sich zu erwartende Langzeit-Schadenswirkung nach Deponierung dort nicht diskutiert wird.

Ziel der vorliegenden Erfindung ist es, die bekanntermaßen sehr hohen und oft auch stoßweise anfallenden Mengen an dünnflüssig wässerigen Abfallprodukten verschiedenster Herkunft auf wirtschaftlich vertretbare Weise in voll deponiefähige Feststoffprodukte mit in ihnen immobilisierten und gegen spätere Elution gesicherten Schadstoffen überzuführen, wobei die abgetrennten hohen Wasseranteile praktisch schadstofffrei vorfluter-gerecht vorliegen müssen.

Gegenstand der vorliegenden Erfindung ist somit ein Verfahren zur Inertisierung und/oder Immobilisierung von anorganischen und/oder organischen umweltrelevanten Schadstoffen in wässerigen Abfallstoff-Dispersionen, -Suspensionen, -Emulsionen und/oder -Lösungen mit Zugabe von hydraulischen Bindemitteln vor einer Trennung von Feststoff- und wässeriger Phase, wobei ein Agglomerierungsmittel zugesetzt wird, das dadurch gekennzeichnet ist, daß man - ohne Zugabe von natürlichen oder synthetischen organischen Agglomerierungsmitteln - zu den genannten Dispersionen, Suspensionen, Emulsionen und/oder Lösungen nach einer Behandlung zur Fällung und/oder Umwandlung der in ihnen enthaltenen Schwermetalle, Schwefelverbindungen, anderen Schadstoffen und/oder organischen Verbindungen mindestens ein anorganisches hydraulisches Bindemittel auf der Basis von Portlandzementklinker, Tonerdezementklinker und/oder hydraulischem Kalk zusetzt und in der Dispersion, Suspension, Emulsion und/oder Lösung, vorzugsweise durch Rühren, eine homogene Mischung des (der) Schadstoffe(s) mit dem (den) Bindemittel(n) herbeiführt und, gegebenenfalls nach einer Schweretrennung, den Wassergehalt des erhaltenen homogenen Schadstoff/Bindemittel-Gemisches, vorzugsweise durch Komprimieren in einer Presse, reduziert, wobei die Abfallstoff-Dispersion, -Suspension, -Emulsion und/oder -Lösung mit einem niedrigen pH-Wert, vorzugsweise unter 5, vorliegt, oder auf einen solchen gebracht wird und diese, vorzugsweise bei erhöhter Temperatur, mit einem Magnesiumverbindungen enthaltenden anorganischen Material aus der Gruppe ungebrannter, halb- oder zur Gänze gebrannter Dolomit bzw. dolomithältiger Kalkstein, Magnesiumchlorid und Magnesiumsulfat mit einem Masseanteil von über 5%, insbesondere über 10%, und besonders bevorzugt über 25% Magnesiumverbindungen, jeweils gerechnet als MgO und bezogen auf den trockenen, glühverlustfreien Zustand des (der) Abfallstoffe(s), und/oder mit einem Aluminiumverbindungen enthaltenden anorganischen Material aus der Gruppe der Hochofenschlacken, Puzzolane, Flugaschen, Trasse, Portlandzementklinker, Tonerdezementklinker und-/oder hydraulischen (Al-hältigem) gebrannter Kalke mit einem Masseanteil von über 5%, insbesondere über 10%, und besonders bevorzugt über 25% $Al_2O_3$-Äquivalent, jeweils bezogen auf den trockenen, glühverlustfreien Zustand des (der) Abfallstoffe(s), versetzt wird.

Unter Vermeidung aufwendiger und hinsichtlich ihrer eventuellen Langzeitschadenswirkung nicht untersuchter organischer Agglomerierungsmittel wird durch die Zugabe der genannten Bindemittel nach einer Behandlung der Abwässer eine Umhüllung der konditionierten Schadstoffe erreicht, die zusammen mit der sich über lange Zeiträume erstreckenden Verfestigung der Bindemittel unter gleichzeitiger Nachreaktionen eine besonders hohe Inertisierung und Schadstoff-Immobilisierung bei hoher mechanischer Festigkeit des so erhältlichen Deponieproduktes erreicht.

Die Erreichung dieser Effekte wird zusätzlich erleichtert, daß der Entwässerungs-, insbesondere Filterpreß-Vorgang erst nach einer durch die Schadstoffe, sowie das eingesetzte Bindemittel bedingten Wartezeit, aber noch vor dem Erhärten des Bindemittels ausgeführt wird. Dadurch wird eine optimale homogene Mischung von Schadstoffen und Bindemittel erreicht, die eine besonders gleichmäßige, dauerhafte und sichere Einbindung, Inertisierung und Immobilisierung der Schadstoffe an jeder Stelle ohne Schwachstellen zur Folge hat. Die chemische bzw. adsorptive Bindung der Schadstoffe an die Kalziumionen des Bindemittels bzw. dessen oberflächenreiche Hydratationsprodukte erfolgt bei der in der Abfallstoff-Dispersion, -Suspension, -Emulsion und/oder Lösung gegebenen hohen Wasserverdünnung besonders schnell und in besonders hohem Ausmaß, was durch die oft vorliegenden hohen Temperaturen noch gefördert wird.

Ein anschließender Komprimiervorgang, beispielsweise in einer Filterpresse, Vakuumpresse, Stempelpresse, Walzenpresse, Brikettierpresse oder ähnlichen Wasserreduktionsvorrichtung, wird durch die vorangegangene Mischung des Bindemittels mit der Abfallstoff-Dispersion, -Suspension, -Emulsion und/oder -Lösung wesentlich erleichtert und beschleunigt, die Ausbildung von Strukturen wird verhindert und der Trockenstoffgehalt des Filterkuchens steigt. Einen weiteren, aus der größeren Reduktion des Wassergehaltes resultierenden Vorteil kann die damit verbundene Reduzierung des Chloridgehaltes der Filterkuchen bringen, wodurch sich die Festigkeit des im Preßvorgang erhaltenen und mit Zement verfestigten Formkörpers verbessern läßt. Durch die oberflächenreichen Erhärtungsprodukte sowie die infolge des geringen Wassergehaltes entstehenden dichteren Gefüge wird die Diffusion von Ionen im erhaltenen Produkt wesentlich herabgesetzt und die Immobilisierung umweltrelevanter Verbindungen wesentlich verbessert.

Die unewartst hohe Einbindung der Schadstoffe läßt sich gemäß der Erfindung durch die Zugabe der anorganischen Materialien zur Fällung und Umwandlung der Schadstoffe erzielen.

Als Beispiele für Schadstoffe, die nach dem erfindungsgemäßen Verfahren besonders gut inertisiert werden können, seien Blei-, Zink-, Cadmium-, Thallium-, Arsen-, Chromverbindungen angeführt, aber auch Fluorverbindungen, organische Säuren wie Weinsäure, Oxalsäure u.dgl. Dabei ist es, je nach Art der Schadstoffe und des eingesetzten Bindemittels, sowie der vorliegenden Temperatur zweckmäßig, zum Erreichen einer möglichst hohen Einbindung, eine gewisse Verweilzeit vorzusehen, meist in der Größenordnung von wenigen Minuten bis zu einigen Stunden. Was die benötigte Bindemittelmenge betrifft, kann man bereits mit Einbindeeffekten rechnen ab Bindemittelmengen von etwa 4 bis 5%, bezogen auf die trockene Masse von Abfallstoff und Bindemittel.

Bezeichnenderweise stimmt diese Zusatzmenge mit den Erfahrungen aus der Bodenstabilisierung überein. Deutlich wird die Einbindewirkung in der Regel ab 7%. Besonders bevorzugt sind die im **Anspruch** 2 genannten Mengenverhältnisse.

Zur Überführung von in den in der wässerigen Abfallstoff-Dispersion, -Suspension, -Emulsion und/oder -Lösung enthaltenen Schwefelverbindungen in Form von unschädlichem Ettringit hat es sich als besonders effizient erwiesen, eine Ausführungsform zu wählen, wie sie **Anspruch** 3 zum Inhalt hat. Diese vor der späteren Wasserreduktion, z.B. in der Filterpresse, erzwungene Ettringitbildung verhindert ein späteres Treiben des Bindemittels und verbessert die Filtrierbarkeit, sowie den Trockenstoffgehalt des Filterkuchens. Schließlich erreicht man durch die Ausfällung der Schwefelverbindungen einen sehr niedrigen Sulfatgehalt des Preßwassers bei nachfolgendem Filtriervorgang. Das ist insbesondere dann von Bedeutung, wenn dieses Preßwasser einem öffentlichen Abwassersammler oder Vorfluter zugeleitet werden muß, für die in der Regel strenge, sonst nicht einzuhaltende Grenzwerte für Sulfate bestehen.

Im allgemeinen werden Schwermetalle und andere Schadstoffe in alle Zemente gut eingebunden. Eine überdurchschnittlich hohe Einbindung ergibt sich aber bei Zementen oder hydraulischen Kalken, die viel Ettringit bilden, d.h., die viel Aluminat oder Aluminatferrit enthalten. Als besonders günstig haben sich schnellerhärtende Zemente mit $12CaO.7Al_2O_3$ und besonders bevorzugt mit $11CaO.7Al_2O_3.CaF_2$, mit den im **Anspruch** 4 genannten Anteilen dieser Verbindungen erwiesen. Diese Zemente, insbesondere solche mit Anteilen an $11CaO.7Al_2O_3.CaF_2$ zeichnen sich im Vergleich zu üblichen Zementen nicht nur durch ein überdurchschnittlich hohes Einbindevermögen, insbesondere auch für schwierig zu inertisierende Schadstoffe, wie z.B. Chromverbindungen, aus, sondern auch durch eine verminderte Anfälligkeit gegenüber erhärtungsstörenden Schadstoffen in den Abfallstoff-Dispersionen, -Suspensionen, -Emulsionen und/oder Lösungen, wie beispielsweise Zinkverbindungen, Phosphatverbindungen oder organische Verbindungen. Der bei der Erhärtung neben anderen Hydratationsprodukten dabei entstehende Ettringit bewirkt darüber hinaus wegen seiner nadelförmigen Struktur und seines hohen Wasserbindevermögens eine hervorragende Filtrierbarkeit und einen entsprechend hohen Trockenstoffgehalt im Filterkuchen.

In diesem Sinn kann auch ein direkter Zusatz von Ettringit zur wässerigen Abfallstoff-Dispersion, -Suspension, -Emulsion und/oder -Lösung vorteilhaft zur Anwendung gelangen, wie dies gemäß **Anspruch** 5 vorgesehen ist.

In diesem Sinne können, wie dies gemäß **Anspruch** 6 vorgesehen ist, zur Vermeidung von treibenden Reaktionen bei Abfallstoff-Dispersionen, -Suspensionen, -Emulsionen und/oder -Lösungen mit reaktionsfähigen Schwefelverbindungen Zemente und/oder hydraulische Kalke mit den dort angeführten, niedrigen Gehalten an Calciumaluminaten zugesetzt werden.

Auch kann die Ettringitbildung durch Einsatz von Zement und/oder Kalk mit hohen Gehalten an Flugasche bzw. Hochofenschlacke gefördert werden. In diesem Fall stammen die Aluminate bzw. Aluminatferrite aus diesen Zusatzstoffen. Als besonders geeignet haben sich Kombinationen dieser Stoffe mit entsprechenden Zementen, wie PSZ 400, herausgestellt.

In diesem Sinne ist es, um das Einbindevermögen für Schadstoffe, insbesondere für Schwermetalle und-/oder organische Verbindungen und/oder störende Ammoniumverbindungen weiter zu erhöhen, besonders günstig, gemäß **Anspruch** 7 vorzugehen. Daraus, daß das Einbindevermögen dieser Materialien unter anderem von ihrer chemischen Natur abhängt und beispielsweise bei Bentoniten und Zeolithen sehr hoch, bei Hochofenschlacke aber geringer ist, resultieren die dort genannten Zugabemengen.

In all diesen Fällen kann die Ettringitbildung durch Herabsetzung der Calciumionenkonzentration der flüssigen Phase durch Zusatz von Alkaliverbindungen, insbesondere Alkalicarbonaten, vorzugsweise in einer Menge von 0,1 bis 5% gesteuert werden, wie dies gemäß **Anspruch** 8 vorgesehen ist.

Zu einer weiteren Verbesserung des Filtrierverhaltens der wässerigen Abfallstoff-Dispersion, -Suspension, Emulsion und/oder -Lösung können im erfindungsgemäßen Verfahren günstigerweise die gemäß **Anspruch** 9 vorgesehenen Filtrierhilfsmittel zugesetzt werden.

Da in dem Bindemittel vorhandene oder zu Beginn des Hydratationsprozesses freigesetzte leichtlösliche Stoffe, z.B. Alkalien, Kalziumhydroxid oder Kalziumsulfat, während des Vermischens mit den wässerigen Abfallstoff-Dispersionen, -Suspensionen, -Emulsionen und/oder -Lösungen in Lösung gehen können und im an das Mischen anschließenden Filtrier- bzw. Preßvorgang mit dem Preßwasser abgeführt werden können, was eine Verschlechterung der Erhärung und der Festigkeit der im Anschluß daran hergestellten Form- bzw. Kompaktkörper zur Folge haben kann, ist es zweckmäßig, gegebenenfalls zusätzliche Mengen dieser leicht löslichen Stoffe vor der Erhärtung des Bindemittels zur Kompensation der oben angeführten Verluste zuzusetzen und/oder solche Bindemittel zu verwenden, die diese leichtlöslichen Stoffe nicht oder in geringeren Mengen enthalten. Dazu ist eine Ausführungsvariante gemäß **Anspruch** 10 besonders zu bevorzugen. Zweckmäßig ist es in diesem Sinn auch, das Filtrier- bzw. Preßwasser einschließlich der darin enthaltenen leichtlöslichen Bestandteile des Bindemittels, allenfalls auch der Abfallstoffe im Kreislauf zu führen und neuen Abfallstoff-Dispersionen, -Suspensionen, -Emulsionen und/oder -Lösungen, die dem Reduktionsvorgang des Wassergehaltes noch nicht unterworfen wurden, zuzusetzen.

Zur Kompensation von Verlusten leicht löslicher Anteile kann vorteilhaft auch gemäß **Anspruch** 11 vorgegangen werden.

Da die Löslichkeit von Schadstoffen stark vom pH-Wert abhängig ist - bei niedrigen pH-Werten ist die Löslichkeit häufig um Zehnerpotenzen höher - kommt einer langfristigen Sicherstellung eines hohen pH-Wertes in dem der Wasserreduktion unterzogenen Abfallstoff-bindemittel-Gemisch besonderes Interesse zu. Diese dauerhafte Aufrechterhaltung eines hohen pH-Wertes kann durch Zusatz eines Alkalidepots erfolgen, wie dies gemäß **Anspruch** 12 vorteilhafterweise vorgesehen ist. Dieses Alkalidepot wird dem Abfallstoff/Bindemittel-Gemisch vorzugsweise noch vor der Wasserreduktion zugesetzt. Je nach Art und Wirkung des Alkalidepots kann eine sehr unterschiedliche Zusatzmenge sich als erforderlich herausstellen, so daß das Alkalidepot zweckmäßig in Mengen von 1 bis etwa 75%, bezogen auf die Summe aus trockenem Abfallstoff und Bindemittel, zugesetzt wird.

Durch das Angebot des Alkalidepots in Form eines Gemisches von mindestens zwei als "Neutralisationsbarrieren" wirkenden Stoffen wird bewirkt, daß der zweite Stoff mit der Niedrig-pH-Reaktivität, solange ein hoher pH-Wert vorliegt, ein "inertes Neutralisationsdepot" darstellt. Erst wenn der pH-Wert unter 7 absinkt, wird dieses Depot wirksam und verhindert durch seine Reaktion ein weiteres Absinken des pH-Wertes und damit eine Erhöhung der Schadstofflöslichkeit. Insbesondere die genannten Grenzen haben sich als zweckmäßig erwiesen für eine vollständige Inertisierung und/oder Immobilisierung von Schadstoffen nach dem erfindungsgemäßen Verfahren. In Sonderfällen können durch gezielte Wahl der das Alkalidepot bildenden Stoffe aber auch andere pH-Neutralisationsbarrieren gewählt werden.

Durch Anwendung des erfindungsgemäßen Verfahrens ist es solcherart möglich, den Wassergehalt des Abfallstoff/Bindemittel-Gemisches so weit zu reduzieren, daß dieses Gemisch nach dem Komprimiervorgang in Formkörper überführt werden kann. Es ist daher unmittelbar nach dem Preßvorgang möglich, die Filterkuchen in einer weiteren Presse oder einem Extruder und dergleichen zu Formkörpern zu verarbeiten, wobei die Überführung dieser in Formkörper unter Druck und/oder Temperatur-einwirkung erfolgen kann. Dabei haben sich mechanische Drücke von über 3, bei höheren Anforderungen von über 15 bzw. über 40 bar und Temperaturen von etwa 50 bis 70°C bewährt. Die höhere Temperatur hat eine wesentliche Beschleunigung des Erhärtungsvorganges des Bindemittels zur Folge. Allenfalls kann die Herstellung der Formkörper auch im Zuge des Komprimiervorgangs ohne eigene nachgeschaltete Presse erfolgen.

Weiters hat es sich auch als vorteilhaft erwiesen, die in der Oberflächenschicht dieser Formkörper vorliegenden alkalisch reagierenden Verbindungen, insbesondere das Calciumhydroxid, durch Einwirkung von Flüssigkeiten, vorzugsweise Kohlensäure, organische Säuren, Lösungen von Carbonaten bzw. Bicarbonaten u.dgl. und/oder von Gasen, z.B. Kohlendioxid, $CO_2$-hältige Abgase u.dgl. zu neutralisieren und/oder die Formkörper mit einer inerten Schutzschicht, bestehend aus mineralischen Stoffen, beispielsweise Wasserglaslösung oder organischen Stoffen, beispielsweise auf Basis von Acrylat, Styrolbutadien, Vinyl-Copolymer oder Gemischen, beispielweise kunststoffmodifizierten hydraulischen Massen, zu überziehen.

Die nach dem erfindungsgemäßen Verfahren hergestellten Mischungen können auch vorteilhaft zu Fertigteilen, Bausteinen, Granulaten, Aggregaten, Betonzuschlägen oder dergleichen verformt werden, gegebenenfalls mit weiteren Zusätzen von Bindemitteln, Zuschlägen oder Wasser. Man kann aber den in der Preßvorrichtung anfallenden Filterkuchen auch ohne weitere Bearbeitung erhärten lassen und ohne irgendwelche Beeinträchtigung der Umwelt deponieren.

Die vorteilhaften Eigenschaften der durch Anwendung des erfindungsgemäßen Verfahrens erhaltenen Formkörper, insbesondere die dadurch erzielbaren Festigkeiten, werden im nachstehenden Beispiel, das die Erfindung nicht einschränken soll, näher erläutert.

Beispiel:

Ein Abwasser aus der Rauchgaswäsche einer Müllverbrennungsanlage wurde in der üblichen Weise mit Kalkhydrat, Eisenchloridlösung und Reagentien zur Fällung der Schwermetalle versetzt und der entstehende Schlamm bei einem Trockenstoffgehalt von 3,9 % auf einer Filterpresse verpreßt. Der dabei anfallende Filterkuchen hatte einen Trockenstoffgehalt von 35 % und wurde dann im Verhältnis 1:2, bezogen auf trockenen Zustand, mit Portlandzement PZ 275 (H) in einem Zwangsmischer gemischt. Um eine ausreichende Verteilung von Zement und Filterkuchen zu erreichen, mußten nochmals 50 % Wasser zugegeben werden. Aus dem auf diese Weise hergestellten Filterkuchen/Zement/Wasser-Gemisch wurden Betonwürfel angefertigt (Vorgangsweise nach dem Stand der Technik).

In einer 2.Versuchsserie wurde dem Schlamm die gleiche Menge Portlandzement erfindungsgemäß bereits vor der Filterpresse zugesetzt. Infolge des in diesem Stadium gegebenen hohen Wassergehaltes des Schlammes konnte die Vermischung von Abfallstoff und Zement durch einfaches Rühren des Schlammes während 3 Minuten erfolgen. Das Gemisch Abfallstoff/Zement wurde dann der Filterpresse zugeleitet. Der anfallende Filterkuchen hatte einen Trockenstoffgehalt von 55 %. Er wurde ohne jede weitere Wasser- oder Zementzugabe in Betonwürfelformen eingestampft.

Die an den auf diese Weise hergestellten Betonwürfeln erzielten Festigkeiten sind in Tabelle 1 festgehalten. Wie daraus hervorgeht, hat die erfindungsgemäße Zugabe des Zements noch vor der Reduktion des Wassergehaltes in der Filterpresse die Festigkeitsentwicklung entscheidend verbessert. Bemerkenswert war weiters, daß die Filtrierzeit in der Filterpresse bei Zugabe des Bindemittels vor der Filterpresse auf ein Viertel der üblichen Dauer abgesunken und daß der Trockenstoffgehalt des Filterkuchens wie erwähnt, von 35 auf 55 % angestiegen ist.

In weiteren Versuchen wurde dann das Mischungsverhältnis "Filterkuchenabfallstoff" zu Zement verändert. Es zeigte sich, daß die zur Verfestigung notwendige Zusatzmenge durch die erfindungsgemäße Zugabe des Bindemittels vor der Filterpresse deutlich niedriger gewählt werden konnte.

Noch bessere Resultate ergaben sich mit Tonerdezement als Bindemittel.

TABELLE 1:

| Bindemittelzusatz nach der vor der Filter- Filter- presse presse | | Mischungsverhältnis Bindemittel:Abfallstoff (bezogen auf trockene Masse beider) | Druckfestigkeit (N/mm²) nach n Tagen | | | |
|---|---|---|---|---|---|---|
| | | | 1 | 7 | 28 | 120 |
| X | | 2:1 | n.e. | 0,8 | 1,5 | 2,9 |
| | X | 2:1 | 2.2 | 3,8 | 6,3 | 10,5 |
| | X | 0,9:1 | 1,0 | 2,1 | 3,3 | 4,5 |
| | X | 0,2:1 | 0,2 | 1,0 | 1,6 | 2,7 |
| | X | 0,4:1 (Tonerdezement) | 3,4 | 3,9 | 5,0 | - |

n.e. = nicht entformbar

**Patentansprüche**

1. Verfahren zur Inertisierung und/oder Immobilisierung von anorganischen und/oder organischen umweltrelevanten Schadstoffen in wässerigen Abfallstoff-Dispersionen, -Suspensionen, -Emulsionen und/oder -Lösungen mit Zugabe von hydraulischen Bindemitteln vor einer Trennung von Feststoff- und wässeriger Phase, dadurch gekennzeichnet, daß man - ohne Zugabe von natürlichen oder synthetischen organischen Agglomerierungsmitteln - zu den genannten Dispersionen, Suspensionen, Emulsionen und/oder Lösungen nach einer Behandlung zur Fällung und/oder Umwandlung der in ihnen enthaltenen Schwermetalle , Schwefelverbindungen, anderen Schadstoffen und/oder organischen Verbindungen mindestens ein anorganisches hydraulisches Bindemittel auf der Basis von Portlandzementklinker, Tonerdezementklinker und/oder hydraulischem Kalk zusetzt und in der Dispersion, Suspension, Emulsion und/oder Lösung, vorzugsweise durch Rühren, eine homogene Mischung des (der) Schadstoffe(s) mit dem (den) Bindemittel(n) herbeiführt und, gegebenenfalls nach einer Schweretrennung, den Wassergehalt des erhaltenen homogenen Schadstoff/Bindemittel-Gemisches, vorzugsweise durch Komprimieren in einer Presse, reduziert, wobei die Abfallstoff-Dispersion, -Suspension, -Emulsion und/oder -Lösung mit einem niedrigen pH-Wert, vorzugsweise unter 5, vorliegt, oder auf einen solchen gebracht wird und diese, vorzugsweise bei erhöhter Temperatur, mit einem Magnesiumverbindungen enthaltenden anorganischen Material aus der Gruppe ungebrannter, halb- oder zur Gänze gebrannter Dolomit bzw. dolomithältiger Kalkstein, Magnesiumchlorid und Magnesiumsulfat mit einem Masseanteil von über 5%, insbesondere über 10%, und besonders bevorzugt über 25%, Magnesiumverbindungen, jeweils gerechnet als MgO und bezogen auf den trockenen, glühverlustfreien Zustand des (der) Abfallstoffe(s), und/oder mit einem Aluminiumverbindungen enthaltenden anorganischen Material aus der Gruppe der Hochofenschlacken, Puzzolane, Flugaschen, Trasse, Portlandzementklinker, Tonerdezementklinker und/oder hydraulischen (Alhältigen) gebrannten Kalke mit einem Masseanteil von über 5%, insbesondere über 10%, und besonders bevorzugt über 25% $Al_2O_3$-Äquivalent, jeweils bezogen auf den trockenen, glühverlustfreien Zustand des (der) Abfallstoffe(s), versetzt wird.

2. Verfahren nach Anspruch 1, dadurch gekennzeichnet, daß das (die) Bindemittel in einer Menge von 10 bis 90%, insbesondere von 20 bis 60%, und besonders bevorzugt von 30 bis 50%, jeweils bezogen auf die Summe der trockenen Masse von Abfallstoff(en) und Bindemittel(n) eingesetzt wird (werden).

**3.** Verfahren nach Ansprüche 1 oder 2, dadurch gekennzeichnet, daß zur Ausfällung von in der Abfallstoff-Dispersion, -Suspension, -Emulsion und/oder -Lösung enthaltenen Schwefelverbindungen in Form von nicht störendem, unlöslichem Ettringit zusätzlich zu dem (den) Bindemittel(n) vor, mit oder nach der Zugabe des (der) Bindemittel(s), erforderlichenfalls in Kombination mit Entschäumern, metallisches Aluminiumpulver und/oder Aluminiumverbindungen, vorzugsweise Natriumaluminat und/oder Tonerdezement, in Mengen bis zu 35%, insbesondere von 1 bis 10%, jeweils bezogen auf die Masse des (der) trockenen Abfallstoffe(s), zugesetzt werden.

**4.** Verfahren nach einem der Ansprüche 1 bis 3, dadurch gekennzeichnet, daß als Bindemittel schneller härtender Zement mit über 5%, vorzugsweise über 10%, und besonders bevorzugt über 15% $12CaO.7Al_2O_3$ bzw. $11CaO.7Al_2O_3.CaF_2$ eingesetzt wird, jeweils bezogen auf die Masse des Bindemittels.

**5.** Verfahren nach einem der Ansprüche 1 bis 4, dadurch gekennzeichnet, daß der wässerigen Abfallstoff-Dispersion, -Suspension, -Emulsion und/oder -Lösung Ettringit zugesetzt wird.

**6.** Verfahren nach einem der Ansprüche 1 bis 5, dadurch gekennzeichnet, daß im Falle des Vorliegens von reaktionsfähigen, die Erhärtung bzw. Dauerbeständigkeit üblicher Bindemittel beeinträchtigenden Schwefelverbindungen in der Abfallstoff-Dispersion, -Suspension, -Emulsion und/oder -Lösung als Bindemittel Zemente und/oder hydraulische Kalke mit einem Gehalt an Calciumaluminaten von unter 3,5%, besonders bevorzugt von 0%, berechnet nach Bogue, zugesetzt werden.

**7.** Verfahren nach einem der Ansprüche 1 bis 6, dadurch gekennzeichnet, daß zusätzlich zu dem (den) Bindemittel(n) vor, mit oder nach deren Zugabe vor der Reduktion des Wassergehaltes, der Abfallstoff-Dispersion, -Suspension, -Emulsion und/oder -Lösung das Einbindevermögen für Schadstoffe, insbesondere für Schwermetalle und/oder organische Stoffe, Kohlenwasserstoffe oder störende Ammoniumverbindungen, erhöhende Materialien aus mindestens einer der Gruppen Flugaschen, Hochofenschlacken, Trasse (jeweils in Mengen von 3 bis 60%, insbesondere von 5 bis 45%, besonders bevorzugt von 10 bis 30%, jeweils bezogen auf die Summe der trockenen Masse von Abfallstoff(en), Bindemittel(n) und Zusatz) und Strukturmaterialien, wie Zeolithe, insbesondere Klinoptilolith, Tone, Bentonite, feinkörnige Kieselsäure, beispielsweise Rückstände der Siliziumindustrie oder gefällte Kieselsäure (in Mengen von über 0,5%, insbesondere über 1,5%, und besonders bevorzugt über 3%, wobei die Obergrenze 30% beträgt, jeweils bezogen auf die Summe der trockenen Masse von Abfallstoff(en), Bindemittel(n) und Zusatz (Zusätze), zugesetzt werden.

**8.** Verfahren nach einem der Ansprüche 1 bis 7, dadurch gekennzeichnet, daß zur Herabsetzung der Calciumionenkonzentration der flüssigen Phase Al-kaliverbindungen, insbesondere Alkalikarbonate, vorzugsweise in einer Menge von 0,1 bis 5%, bezogen auf die Masse des Bindemittels, zugesetzt werden.

**9.** Verfahren nach einem der Ansprüche 1 bis 8, dadurch gekennzeichnet, daß zusätzlich zu dem (den) Bindemittel(n) vor der Reduktion des Wassergehaltes, der Abfallstoff-Dispersion, -Suspension, -Emulsion und/oder -Lösung mindestens ein Filtrierhilfsmittel aus den Gruppen der anionischen, kationischen oder neutral wirksamen anorganischen Flockungsmittel und Mineralien, wie Sande und/oder Fasern zugesetzt werden.

**10.** Verfahren nach einem der Ansprüche 1 bis 9, dadurch gekennzeichnet, daß zur Vorbeugung von Verlusten leicht löslicher Anteile des Bindemittels beim nachfolgenden Wasserreduktionsvorgang, z.B. durch Abführen mit dem Preßwasser, als Bindemittel Zemente und/oder hydraulische Kalke, die als Sulfaterstarrungsregler Anhydrit enthalten, und/oder gemahlener Portlandzementklinker und/oder Tonerdezementkliner zugesetzt werden.

**11.** Verfahren nach einem der Ansprüche 1 bis 10, dadurch gekennzeichnet, daß zur Kompensation von Verlusten leicht löslicher Anteile des Bindemittels beim nachfolgenden Wasserreduktionsvorgang, z.B. durch Abführen mit dem Preßwasser, dem Abfallstoff/Bindemittel-Gemisch noch vor der Erhärtung des Bindemittels solche leicht löslichen Stoffe aus den Gruppen Alkalien, Kalkhydrate und/oder Erstarrungszeitregler zugesetzt werden.

**12.** Verfahren nach einem der Ansprüche 1 bis 11, dadurch gekennzeichnet, daß zur dauerhaften Aufrechterhaltung eines hohen pH-Wertes von über 8 in dem der Wasserreduktion unterzogenen Abfallstoff/Bindemittel-Gemisch, vorzugsweise noch vor der Wasserreduktion, ein Alkalidepot in Form von Alkali- und/oder Erdalkaliverbindungen zugesetzt wird, insbesondere in Form von grobkörnigem Portlandzementklinker, erhärtetem Zementstein, zerkleinertem Recyclingbeton, Gasbeton, Asbestzementabfällen, hartgebranntem Kalk oder Dolomit oder halbgebranntem Dolomit, Hochofenschlacke, Flugasche und-/oder Alkalihydroxid, gegebenenfalls in Form eines Gemisches von mindestens zwei als Neutralisationsbarrieren wirkenden Stoffen, von denen der eine Stoff seine Hauptreaktivität bei pH-Wert oberhalb 8 aufweist, der andere Stoff bei niedrigem pH-Wert im Bereich zwischen 5 und 7 und ein gegebenenfalls vorhandener dritter Stoff mit Reaktivität im Bereich knapp unter pH 5.

13. Verfahren nach einem der Ansprüche 1 bis 12, dadurch gekennzeichnet, daß der Wassergehalt des Abfallstoff/Bindemittel-Gemisches beim Komprimiervorgang, vorzugsweise in der Presse, so weit reduziert wird, daß das Abfallstoff/Bindemittel-Gemisch, gegebenenfalls unter Druck- und/oder Temperatureinwirkung, in Formkörper überführt werden kann.

14. Verfahren nach Anspruch 13, dadurch gekennzeichnet, daß die in der Oberflächenschicht der Formkörper vorliegenden, alkalisch reagierenden Verbindungen, insbesondere das Calciumhydroxid, durch Einwirkung von mindestens einer Flüssigkeit, aus den Gruppen der Carbonat-, Hydrogencarbonat-, Kohlensäurelösungen und organischen Säuren, und/oder von Gasen, aus der Gruppe Kohlendioxid und $CO_2$-hältige Abgase in unlösliche, neutral reagierende Verbindungen überführt werden und/oder daß die Formkörper mit einer inerten Schutzschicht aus mineralischen Stoffen, wie Wasserglaslösung oder organischen Stoffen, beispielsweise auf Basis von Acrylat, Styrol-Butadien, Vinyl-Copolymer oder Gemischen, beispielsweise kunststoffmodifizierten hydraulischen Massen, versehen werden.

## Claims

1. Process for making inorganic and/or organic environmentally harmful substances inert and/or for immobilising them in aqueous waste material dispersions, suspensions, emulsions and/or solutions with the addition of hydraulic bonding agents before a separation of the solid and aqueous phase, characterised in that without the addition of natural or synthetic organic agglomerating agents at least one inorganic hydraulic bonding agent based on Portland cement clinker, high alumina cement clinker and/or hydraulic lime is added to the above-mentioned dispersions, suspensions, emulsions and/or solutions after a treatment for the precipitation and/or reaction of the heavy metals, sulphur compounds, other harmful substances and/or organic compounds contained in them, and a homogenous mixture of the harmful substance(s) with the bonding agent(s) is produced in the dispersion, suspension, emulsion and/or solution, preferably by stirring and, possibly after a gravity separation, the water content of the homogenous harmful substance/bonding agent-mixture thus obtained is reduced, preferably by compressing in a press, whereby the waste material dispersion, suspension, emulsion and/or solution has a low pH value, preferably below 5, or is brought to such a value and this is added, preferably at high temperature, to an inorganic material, containing magnesium compounds, from the group of uncalcined, semi or completely calcined dolomite or dolomite-containing limestone, magnesium chloride and magnesium sulphate with a content by mass of over 5%, in particular over 10%, and particularly preferred over 25%, of magnesium compounds, respectively calculated as MgO and based on the dry red heat loss-free state of the waste material(s), and/or to an inorganic material, containing magnesium compounds, from the group of blast furnace slag, pozzuolana (Puzzolane), flue ashes, volcanic tuffs, Portland cement clinker, high alumina cement clinker and/or hydraulic (Al-containing) calcined limes with a content by mass of over 5%, in particular over 10%, and particularly preferred over 25% $Al_2O_3$ equivalent, respectively based on the dry red heat loss-free state of the waste material(s).

2. Process according to claim 1, characterised in that the bonding agent(s) is (are) used in an amount of from 10 to 90%, in particular from 20 to 60%, and particularly preferred from 30 to 50%, respectively based on the sum of the dried mass of waste material(s) and bonding agent(s).

3. Process according to claims 1 or 2, characterised in that metallic aluminium powder and/or aluminium compounds, preferably sodium aluminate and/or high alumina cement, in amounts of up to 35%, in particular from 1 to 10%, respectively based on the mass of the dried waste material(s) are added for the precipitation of sulphur compounds contained in the waste material dispersion, suspension, emulsion and/or solution in the form of non-disturbing insoluble ettringite in addition to the bonding agent(s) before, with or after the addition of the bonding agent(s), if necessary in combination with defoaming agents.

4. Process according to one of claims 1 to 3, characterised in that as a bonding agent there is used quick-setting cement with over 5%, preferably over 10%, and particularly preferred over 15% $12CaO.7Al_2O_3$ or $11CaO.7Al_2O_3.CaF_2$, respectively based on the mass of the bonding agent.

5. Process according to one of claims 1 to 4, characterised in that ettringite is added to the aqueous waste material dispersion, suspension, emulsion and/or solution.

6. Process according to one of claims 1 to 5, characterised in that in the case of the presence of reactive sulphur compounds in the waste material dispersion, suspension, emulsion and/or solution, adversely affecting the setting or durability of conventional bonding agents, cements and/or hydraulic limes with a calcium aluminate content of less than 3.5%, particularly preferred of 0%, calculated according to Bogue, are added as bonding agents.

7. Process according to one of claims 1 to 6, characterised in that in addition to the bonding agent(s) before, with or after their addition, before the reduction in the water content, materials are added to the waste material dispersion, suspension, emulsion and/or solution which increase the binding ability for harmful substances, in particular for heavy metals and/or organic materials, hydrocarbons or disturbing ammonium compounds, the materials being from at least one of the groups of flue ashes, blast furnace slag, volcanic tuffs (respectively in amounts of from 3 to 60%, in particular from 5 to 45%, particularly preferred from 10 to 30%, respectively based on the sum of the dried mass of waste material(s), bonding agent(s) and additive) and structural materials such as zeolites, in particular klinoptilolite, clays, bentonite, fine-grained silica, for instance residues of the silicon industry or precipitated silica (in amounts of over 0.5%, in particular over 1.5%, and particularly preferred over 3%, the upper limit being 30%, respectively based on the sum of the dried mass of waste material(s), bonding agent(s) and additive(s)).

8. Process according to one of claims 1 to 7, characterised in that in order to reduce the calcium ion concentration of the liquid phase alkali compounds, in particular alkali carbonates, preferably in an amount of from 0.1 to 5%, based on the mass of the bonding agent, are added.

9. Process according to one of claims 1 to 8, characterised in that in addition to the bonding agent(s) before the reduction in the water content at least one filtering aid from the groups of anionic, cationic or neutrally acting inorganic flocculating agent and minerals such as sands and/or fibres are added to the waste material dispersion, suspension, emulsion and/or solution.

10. Process according to one of claims 1 to 9, characterised in that so as to prevent losses of easily soluble amounts of the bonding agent during the subsequent water reduction process, e.g. by discharging with the high pressure water, cements and/or hydraulic limes which contain anhydrite as a sulphate setting regulator, and/or milled Portland cement clinker and/or high alumina cement clinker are added as bonding agents.

11. Process according to one of claims 1 to 10, characterised in that to compensate for losses of easily soluble amounts of the bonding agent during the subsequent water reduction process, e.g. by discharging with the high pressure water, such easily soluble materials from the groups of alkalis, calcium hydroxides and/or setting time regulators are added to the waste material/bonding agent mixture before setting of the bonding agent.

12. Process according to one of claims 1 to 11, characterised in that for permanently maintaining a high pH value of over 8 in the waste material/bonding agent mixture subjected to water reduction, preferably before the water reduction, an alkali deposit in the form of alkali and/or alkaline earth compounds is added, in particular in the form of coarse-grained Portland cement clinker, hardened cement stone, crushed recycling concrete, aerated concrete, asbestos cement waste, hard baked lime or dolomite or half baked dolomite, blast furnace slag, flue ashes and/or alkali hydroxide, possibly in the form of a mixture of at least two materials acting as neutralisation barriers, one of which materials has its main reactivity at pH value above 8, the other at low pH value in the range of between 5 and 7, and a possible third present material with reactivity in the range of just under pH 5.

13. Process according to one of claims 1 to 12, characterised in that the water content of the waste material/bonding agent mixture during the compressing process, preferably in the press, is reduced to such an extent that the waste material/bonding agent mixture, possibly under the effect of pressure and/or temperature, can be converted into moulded articles.

14. Process according to claim 13, characterised in that the alkalinically reacting compounds present in the surface layer of the moulded bodies, in particular calcium hydroxide, are converted, by the effect of at least one liquid from the groups of carbonate-, hydrogen carbonate-, carbon dioxide solutions and organic acids, and/or of gases from the group carbon dioxide and $CO_2$-containing exhaust gases in insoluble neutrally reacting compounds and/or in that the moulded articles are provided with an inert protective layer of mineral materials, such as water glass (sodium silicate) solution or organic materials, for instance based on acrylate, styrol butadiene, vinyl copolymer or mixtures, for instance plastics-modified hydraulic masses.

**Revendications**

1. Procédé pour rendre inertes et/ou pour immobiliser des substances inorganiques et/ou organiques nocives pour l'environnement, dans des dispersions, suspensions, émulsions et/ou solutions aqueuses de matières résiduaires, avec addition de liants hydrauliques avant une séparation de la phase solide de la phase aqueuse, caractérisé en ce que - sans addition d'agglomérants organiques naturels ou synthétiques - on ajoute au moins un liant hydraulique inorganique, à base de clinker de ciment portland, de clinker de ciment d'alumine et/ou de chaux hydraulique, dans les dispersions, suspensions, émulsions et/ou solutions mentionnées, après un traitement pour la précipitation et/ou la transformation des métaux lourds, composés sulfurés, autres substances nocives et/ou composés organiques contenus dans celles-ci, et on provoque dans la dispersion, suspension, émulsion et/ou solution, de préférence par agitation, un mélange homogène de la (ou des) substance(s) nocive(s) avec le (ou les) liant(s) et, le cas échéant après séparation gravimétrique, on réduit la teneur en eau du mélange homogène substance nocive/liant obtenu, de préférence par compression dans une presse, la dispersion, suspension, émulsion et/ou solution de matières résiduaires se présentant avec un pH bas, de préférence inférieur à 5, ou bien étant portée à un tel pH, et celle-ci étant mélangée, de préférence à une température élevée, avec une matière inorganique contenant des composés de magnésium, du groupe dolomie non calcinée, semi-calcinée ou calcinée à mort, ou castine contenant de la dolomie, chlorure de magnésium et sulfate de magnésium dans une proportion de plus de 5 %, en particulier de plus de 10 %, et plus particulièrement de préférence de plus de 25 %, les composés de magnésium étant à chaque fois calculés sous forme de MgO et rapporté à l'état sec de la (ou des) matière(s) résiduaire(s), sans perte par calcination, et/ou avec une matière inorganique contenant des composés d'aluminium, du groupe des laitiers de hauts fourneaux, pouzzolane, cendres volantes, trass, clinker de ciment portland, clinker de ciment d'alumine et/ou chaux calcinée hydraulique (contenant de l'aluminium) dans une proportion de plus de 5 %, en particulier de plus de 10 %, et plus particulièrement de préférence de plus de 25 % d'équivalent $Al_2O_3$, à chaque fois rapporté à l'état sec de la (ou des) matière(s) résiduaire(s), sans perte par calcination.

2. Procédé suivant revendication 1, caractérisé en ce que le (ou les) liant(s) est (sont) utilisé(s) dans une quantité de 10 à 90 %, en particulier de 20 à 60 %, et plus particulièrement de préférence de 30 à 50 %, à chaque fois rapporté à la somme de la masse sèche de la (ou des) matière(s) résiduaire(s) et du (ou des) liant(s).

3. Procédé suivant l'une des revendications 1 ou 2, caractérisé en ce que, pour la précipitation des composés sulfurés contenus dans la dispersion, suspension, émulsion et/ou solution de matière(s) résiduaire(s) sous forme d'éttringite non perturbatrice, insoluble, on ajoute en plus du (ou des) liant(s), avant, avec ou après l'addition du (ou des) liant(s), au besoin en combinaison avec des agents antimoussants, de la poudre d'aluminium métallique et/ou des composés d'aluminium, de préférence de l'aluminate de sodium et/ou du ciment d'alumine, dans des quantités jusqu'à 35 %, en particulier de 1 à 10 %, à chaque fois rapporté à la masse de la (ou des) matière(s) résiduaire(s) sèche(s).

4. Procédé suivant l'une des revendications 1 à 3, caractérisé en ce que l'on utilise comme liant un ciment à prise rapide avec plus de 5 %, en particulier plus de 10 %, et plus particulièrement de préférence plus de 15 % de $12CaO.7Al_2O_3$ ou $11CaO.7Al_2O_3.CaF_2$, à chaque fois rapporté à la masse du liant.

5. Procédé suivant l'une des revendications 1 à 4, caractérisé en ce que l'on ajoute de l'éttringite à la dispersion, suspension, émulsion et/ou solution aqueuse de matières résiduaires.

**6.** Procédé suivant l'une des revendications 1 à 5, caractérisé en ce que, dans le cas de la présence de composés sulfurés réactifs, gênant le durcissement ou la stabilité des liants habituels, dans la dispersion, suspension, émulsion et/ou solution de matière(s) résiduaire(s), on ajoute comme liants des ciments et/ou chaux hydrauliques avec une teneur en aluminates de calcium inférieure à 3,5 %, et plus particulièrement de préférence de 0 %, calculée d'après Bogue.

**7.** Procédé suivant l'une des revendications 1 à 6, caractérisé en ce que l'on ajoute à la dispersion, suspension, émulsion et/ou solution de matière(s) résiduaire(s), en plus du (ou des) liant(s), avant, avec ou après leur addition avant la réduction de la teneur en eau, des matières augmentant la capacité de liaison pour les substances nocives, en particulier pour les métaux lourds et/ou les matières organiques, les hydrocarbures ou les composés d'ammonium perturbateurs, matières d'au moins un des groupes cendres volantes, laitiers de hauts fourneaux, trass (à chaque fois dans des quantités de 3 à 60 %, en particulier de 5 à 45 %, et plus particulièrement de préférence de 10 à 30 %, à chaque fois rapporté à la somme de la masse sèche de la (ou des) matière(s) résidulaire(s), liant(s) et additifs(s), et des matières structurales, comme la zéolithe, en particulier la klinoptilolithe, les argiles, la bentonite, l'acide silicique à grains fins, par exemple des résidus de l'industrie du silicium ou de l'acide silicique précipité (dans des quantités de plus de 0,5 %, en particulier de plus de 1,5 %, et plus particulièrement de préférence de plus de 3 %, la limite supérieure étant de 30 %, à chaque fois rapporté à la somme de la masse sèche de la (ou des) matière(s) résiduaire(s), liant(s) et additif(s).

**8.** Procédé suivant l'une des revendications 1 à 7, caractérisé en ce que, pour la diminution de la concentration en ions calcium de la phase liquide, on ajoute des composés alcalins, en particulier des carbonates alcalins, de préférence dans une quantité de 0,1 à 5 %, rapporté à la masse du liant.

**9.** Procédé suivant l'une des revendications 1 à 8, caractérisé en ce que l'on ajoute à la dispersion, suspension, émulsion et/ou solution de matière(s) résiduaire(s), en plus du (ou des) liant(s), avant la réduction de la teneur en eau, au moins un adjuvant de filtration des groupes des floculants inorganiques anioniques, cationiques ou neutres et des minéraux tels que les sables et/ou les fibres.

**10.** Procédé suivant l'une des revendications 1 à 9, caractérisé en ce que, pour prévenir les pertes de parties facilement solubles du liant lors des opérations suivantes de réduction aqueuse, par exemple par évacuation avec l'eau exprimée, on ajoute comme liants des ciments et/ou des chaux hydrauliques qui contiennent de l'anhydrite en tant que régulateurs de prise des sulfates, et/ou un clinker de ciment portland broyé et/ou un clinker de ciment d'alumine.

**11.** Procédé suivant l'une des revendications 1 à 10, caractérisé en ce que, pour compenser les pertes de parties facilement solubles du liant lors des opérations suivantes de réduction aqueuse, par exemple par évacuation avec l'eau exprimée, on ajoute au mélange matière résiduaire/liant, avant le durcissement du liant, des matières facilement solubles des groupes alcalis, hydrates de calcium et/ou régulateurs du temps de prise.

**12.** Procédé suivant l'une des revendications 1 à 11, caractérisé en ce que, pour le maintien durable d'un pH élevé supérieur à 8 dans le mélange matière résiduaire/liant soumis à la réduction aqueuse, de préférence avant la réduction aqueuse, on ajoute un dépôt alcalin sous la forme de composés alcalins et/ou alcalino-terreux, en particulier sous la forme d'un clinker de ciment portland à gros grains, d'une pâte de ciment durcie, de béton de recyclage broyé, de béton cellulaire, de résidus d'amiante-ciment, de chaux calcinée dure ou de dolomie ou dolomie semi-calcinée, de laitier de hauts fourneaux, de cendres volantes et/ou d'hydroxyde alcalin, le cas échéant sous la forme d'un mélange d'au moins deux matières agissant comme une barrière de neutralisation, l'une de ces matières présentant sa réactivité principale à un pH supérieur à 8, l'autre matière à un pH bas dans une plage de 5 à 7 et le cas échéant une troisième matière avec une réactivité dans une plage à peine inférieure à un pH de 5.

**13.** Procédé suivant l'une des revendications 1 à 12, caractérisé en ce que la teneur en eau du mélange matière résiduaire/liant lors de l'opération de compression, de préférence dans la presse, est si largement réduite que le mélange matière résiduaire/liant, le cas échéant sous l'effet de la pression et/ou de la température, peut transformé en produit moulé.

**14.** Procédé suivant revendication 13, caractérisé en ce que les composés se trouvant dans la couche superficielle des produits moulés, réagissant dans un pH alcalin, en particulier l'hydroxyde de calcium, sont transformés en composés insolubles, à réaction neutre, par l'effet d'au moins un liquide, des groupes des solutions de carbonate, carbonate d'hydrogène, acide carbonique et acides organiques, et/ou de gaz, du groupe bi-oxyde de carbone et gaz résiduaires à teneur en $CO_2$, et/ou caractérisé en ce que les produits moulés sont munis d'une couche de protection inerte en matières minérales, comme le verre soluble ou matières organiques, par exemple à base d'acrylate, de styrène-butadiène, de copolymère de vinyle ou mélanges, par exemple matières hydrauliques modifiées par des matières plastiques.